# EUROPEAN PATENT SPECIFICATION

(11) **EP 4 508 317 B1**
(45) Date of publication and mention of the grant of the patent: **01.04.2026**
(21) Application number: 23713758.3
(22) Date of filing: 09.03.2023
(51) Int. Cl.: F01P 7/16, F01P 3/20, B60K 11/02, F16K 11/083, B60K 1/00, F16K 11/076, F16K 37/00, F16K 31/04

(54) **THERMAL MANAGEMENT SYSTEM**
WÄRMEVERWALTUNGSSYSTEM
SYSTÈME DE GESTION THERMIQUE

(30) Priority: 11.04.2022 IT 202200007157
(43) Date of publication of application: 19.02.2025
(73) Proprietor: Industrie Saleri Italo S.P.A., 25065 Lumezzane, Brescia (IT)
(72) Inventor: CORNACCHIA, Simone, 25065 Lumezzane, Brescia (IT); BERTELLA, Davide, 25065 Lumezzane, Brescia (IT)
(74) Representative: Gamba, Alessandro
(86) International application number: PCT/IB2023/052242
(87) International publication number: WO 2023/199128

(56) References cited:
- WO-A1-2005/061869
- US-A1- 2021 188 043
- US-B2- 10 232 702

## Description

The present invention relates to a thermal management system of a thermal management installation of a vehicle. Additionally, the present invention also relates to the thermal management installation of a vehicle comprising said thermal management system. Furthermore, the present invention also relates to a vehicle comprising said installation and said system of thermal management.

In other words, the present invention relates to the automotive field, and in detail, to the thermal management installation of a vehicle. In particular, the term "vehicle" means any transport means without any limitation linked to the type or size, i.e., a motor vehicle or a tractor trailer.

The need to manage the temperature of the operating groups of the vehicle so as to take them to and/or keep them in the best possible operating conditions (by cooling and/or heating them) is known from the prior art.

In the present disclosure, "operating group" means a specific component or group of components for carrying out a given operation required for the motion of the vehicle. Therefore, for example, operating group means the endothermic engine group, or the battery group, or the gearbox group, or the transmission group, or even the electric motor group.

Electric-powered and/or hybrid-powered vehicle solutions, i.e., comprising specific components of an electric nature, are known and increasingly common in the prior art.

Indeed, the electric power supply involves specific components, e.g., the electric motor group and/or the battery group, which require distinct and sometimes completely different operating modes also depending on the environmental conditions under which the vehicle is used, e.g., during the vehicle motion steps, the starting steps, the parking steps or the battery charging steps. Therefore, it is apparent that each operating group has different thermal management, cooling and/or heating needs, as a function of the different operating situations of the vehicle.

Vehicle solutions are thus known, which comprise a specific thermal management installation for each operating group, in which a specific amount of working fluid circulates. In such embodiments, each specific thermal management installation is designed independently, requiring specific components (e.g., specific pump groups and/or specific heat exchangers). Examples are disclosed in document US10232702B2.

In this context, the problem of having, managing, arranging, and producing a plurality of thermal regulation installations on the same vehicle is thus apparent.

Therefore, the main problem present in this field is that of having, housing, and managing a multitude of components required for the thermal management of each operating group on the same vehicle.

Given the above, the need to solve the aforesaid technical problems is strongly felt.

It is thus the object of the present invention to provide a new thermal management system by means of which such a need is met.

Such an object is achieved by a thermal management system as claimed in claim 1. Similarly, such an object is achieved by a thermal management installation of a vehicle comprising such a thermal management system, as claimed in claim 18. Moreover, such an object is achieved by a vehicle comprising the thermal management installation according to claim 19.

The claims dependent thereon show preferred variants implying further advantageous aspects.

Further features and advantages of the invention will become apparent from the following description of preferred exemplary embodiments thereof, given by way of non-limiting indication, with reference to the accompanying drawings, in which:

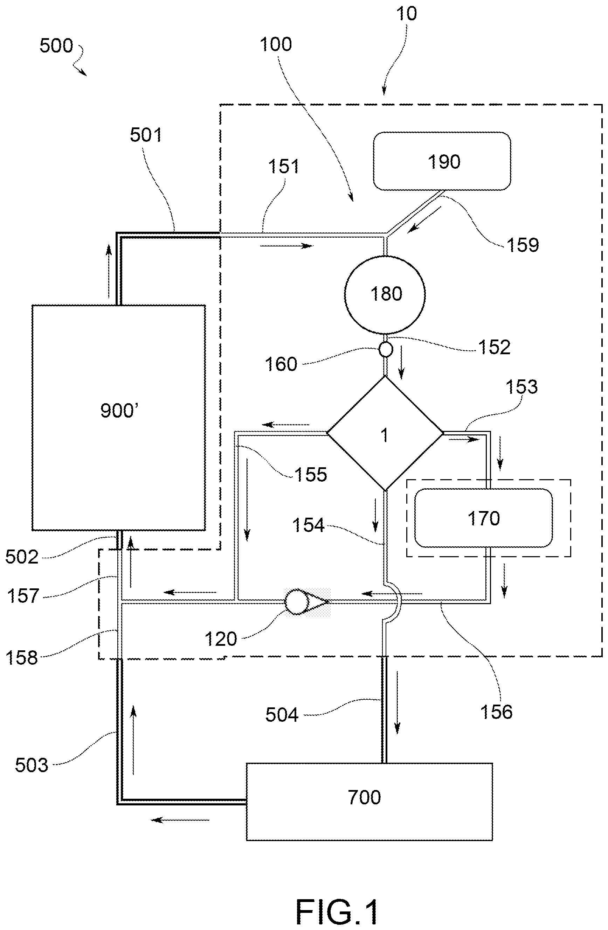

- figure 1 diagrammatically shows a thermal management installation according to a preferred embodiment fluidically connected to an operating group and a vehicle heat exchanger;

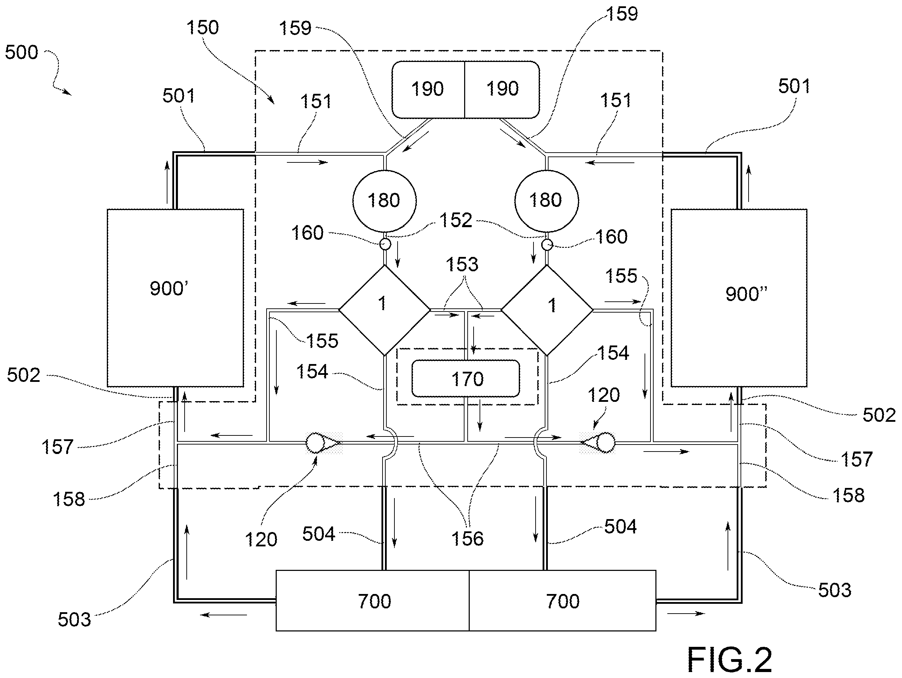

- figure 2 diagrammatically shows a thermal management installation according to a preferred embodiment fluidically connected to two operating groups and two vehicle heat exchangers;

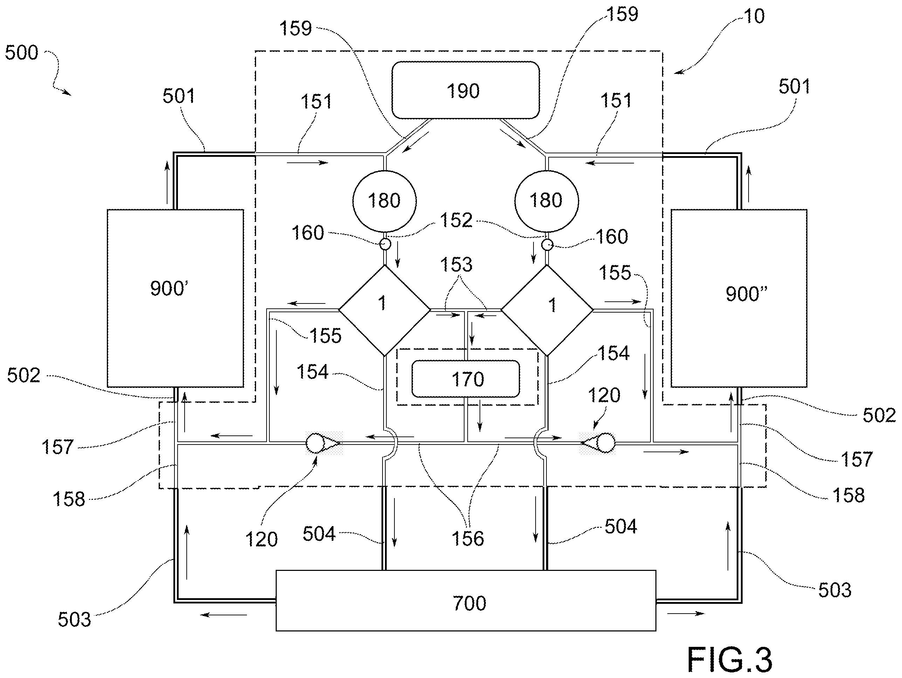

- figure 3 diagrammatically shows a thermal management installation according to a preferred embodiment fluidically connected to two operating groups and a vehicle heat exchanger;

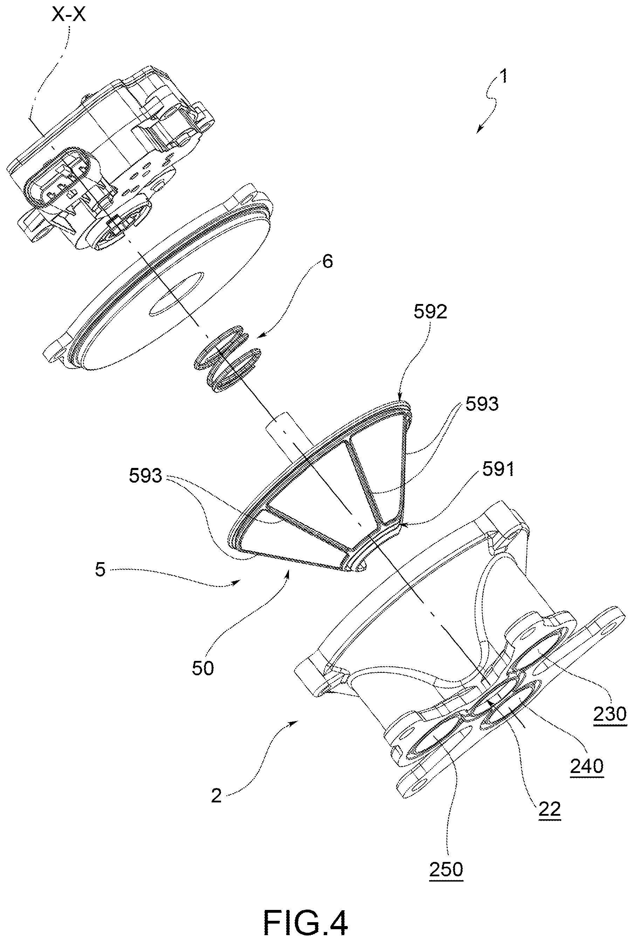

- figure 4 shows a perspective view with parts separated of a regulation device according to a preferred embodiment;

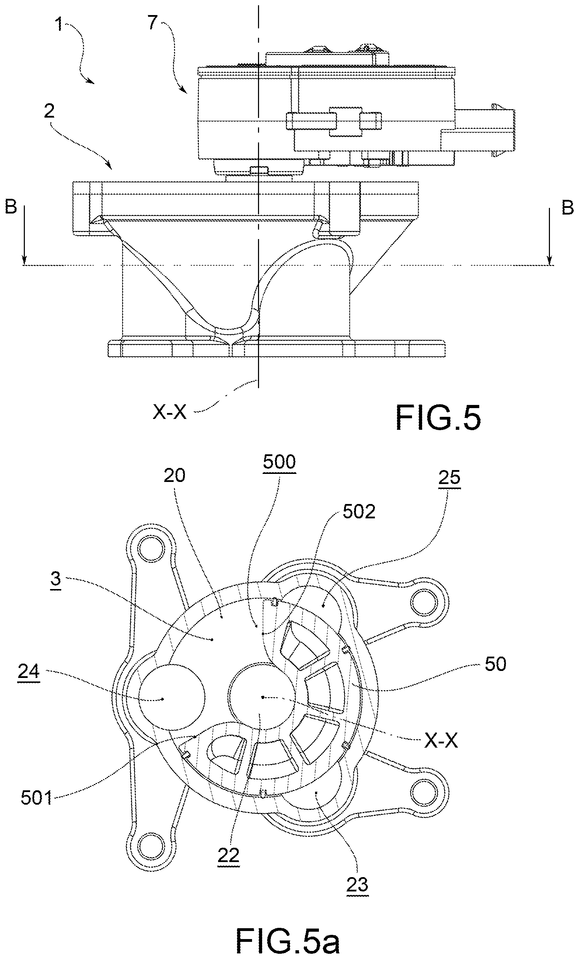

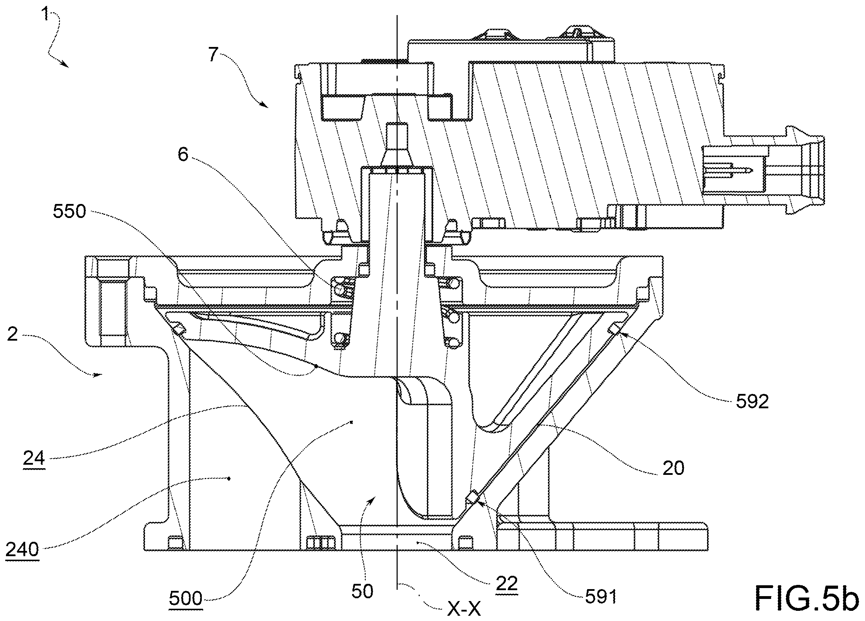

- figure 5 is a side view of the regulation device in figure 4;
- figures 5a and 5b shows two section views of the regulation device in figure 5;

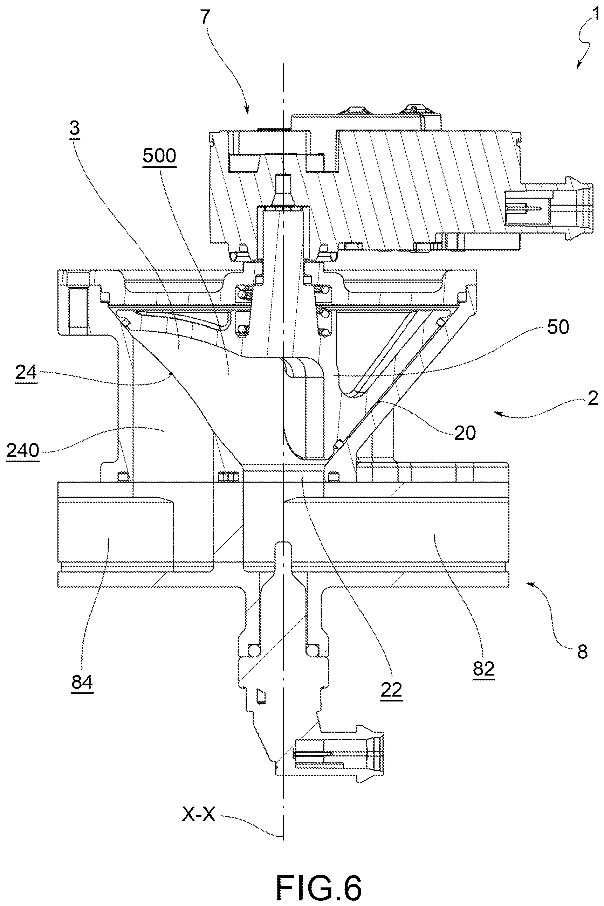

- figure 6 is a section view of a regulation device comprising a connection body, according to a further embodiment;

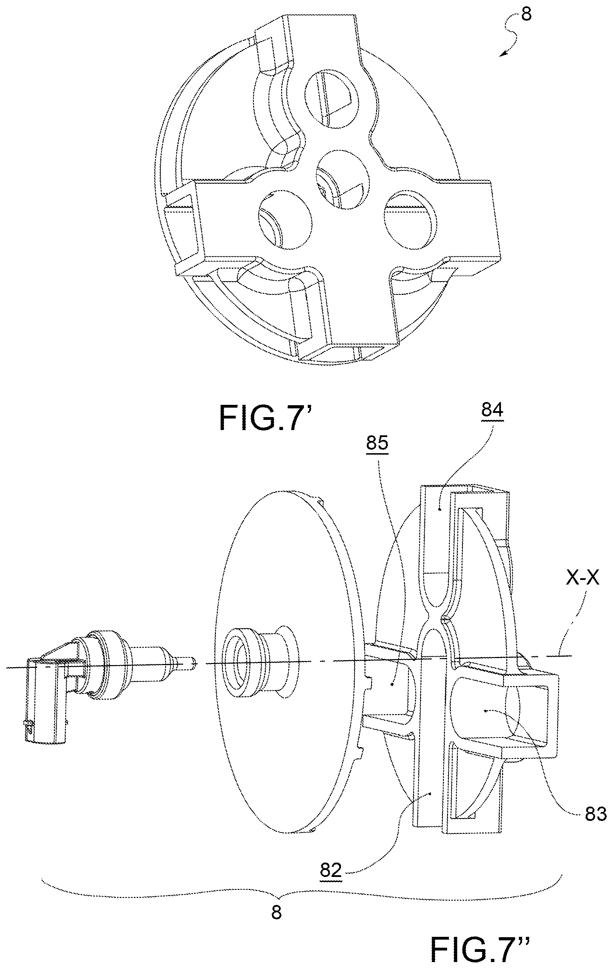

- figures 7' and 7" show a perspective view with separate parts and a perspective view of the connection body in figure 6, respectively.

With reference to the accompanying figures, a thermal management system of a thermal management installation 500 of a vehicle, according to the present invention, is indicated by reference numeral 10.

The vehicle comprises at least one operating group 900, such as an engine group or battery group, and at least one vehicle heat exchanger 700.

Preferably, said vehicle heat exchanger 700 is a radiator, i.e., it performs a heat exchange between a fluid in liquid form, such as the working fluid, and a fluid in gaseous form, such as ambient air.

The thermal management installation 500 comprises a plurality of installation conduits 501, 502, 503, 504 suitable for fluidically connecting the thermal management system 10 to the at least one operating group 900 and the at least one heat exchanger 700.

According to the present invention, the thermal management system 10 comprises a thermal management assembly 100 fluidically connected to an operating group 900 and a heat exchanger 700.

According to a preferred embodiment, in which the vehicle comprises two operating groups 900, such as an engine group and a battery group, and at least one vehicle heat exchanger 700, and in which the thermal management system 10 comprises two thermal management systems 100, each thermal management assembly 100 is fluidically connected to an operating group; for example, one thermal management assembly 100 is fluidically connected to the first operating group 900' while the other thermal management assembly 100 is fluidically connected to the second operating group 900".

According to the present invention, the thermal management assembly 100 comprises at least one pump group 180.

Preferably, the pump group 180 is of the radial-pump type.

Preferably, the operation of pump group 180 involves the circulation of the working fluid in the thermal management system 10, and more in general, in the thermal management installation 500, the operating group 900, and the vehicle heat exchanger 700.

According to the present invention, the thermal management assembly 100 comprises at least one assembly heat exchanger 170.

According to a preferred embodiment, the assembly heat exchanger 170 is a heat exchanger of the liquid-cooled type.

Preferably, the assembly heat exchanger 170 is a chiller.

According to the present invention, the thermal management assembly 100 comprises at least one regulation device 1, described in detail below.

According to the present invention, the thermal management assembly 100 comprises assembly conduits 150 for the fluidic connection of the aforesaid components.

According to the present invention, the assembly conduits 150 comprise:
- an assembly inlet conduit 151 fluidically connecting the operating group 900 and the pump group 180;
- an intermediate conduit 152 fluidically connecting the pump group 180 and the regulation device 1;
- a first regulation conduit 153 fluidically connecting the regulation device 1 and the assembly heat exchanger 170;
- a second regulation conduit 154 fluidically connecting the regulation device 1 and the vehicle heat exchanger 700;
- a third regulation conduit 155 fluidically connecting the regulation device 1 and the operating group 900;
- an exchanger outlet conduit 156 fluidically connecting the assembly heat exchanger 170 and the operating group 900.

Therefore, according to a preferred embodiment, the regulation device 1 has a single inlet and a plurality of outlets.

According to the present invention, the regulation device 1 extends along an axis X-X comprising a device body 2 comprising a regulation chamber 3 and comprising a regulation member 5 housed in said regulation chamber 3.

Said device body 2 comprises a device inlet mouth 22 positioned on the axis X-X, and device outlet mouths 23, 24, 25 spaced apart from axis X-X.

According to a preferred embodiment, the device outlet mouths 23, 24, 25 are positioned to be angularly equidistant from one another.

According to a preferred embodiment, the device body 2 comprises three device outlet mouths.

According to the present invention, the regulation member 5 comprises a regulation head 50 extending over a circumferential stretch comprising a regulation window 500, which extends angularly.

In other words, according to a preferred embodiment, the regulation head 50 is substantially axisymmetric in shape with respect to axis X-X, except for the space defined by the regulation window 500.

According to the present invention, the regulation member 5 is guidable in a rotary motion with respect to axis X-X.

According to the present invention, the regulation member 5 is positionable in a regulation position, in which it diverts the working fluid outlet to a single device outlet mouth 23, 24, 25, or in a regulation position, in which it diverts the working fluid outlet between two device outlet mouths 23, 24, 25.

According to the present invention, by means of the regulation device 1, by regulating the position of the regulation member 5, the working fluid is either entirely diverted to an outlet, and thus to one component, or is diverted between two outlets, and thus between two components.

In other words, in the thermal management system 10, by means of regulation device 1, the temperature of the working fluid is regulated as a function of the needs of the operating group, or operating groups, by directing all of the fluid flow to the operating group or to one of the two heat exchangers, which in turn are fluidically connected to the operating group; alternatively, the thermal management system 10 manages the fluid temperature by directing part of the flow to the operating group or to one of the two heat exchangers, and another part of the flow to the operating group or one of the two heat exchangers.

According to a preferred embodiment, the device body 2 comprises outlet stretches 230, 240, 250 fluidically connected to the regulation chamber 3 through the device outlet mouths 23, 24, 25.

Preferably, said outlet stretches 230, 240, 250 extend parallel to axis X-X.

According to a preferred embodiment, the outlet stretches 230, 240, 250 are placed radially about the inlet mouth 22.

According to a preferred embodiment, the device body 2 comprises a regulation wall 20 on which the device outlet mouths 23, 24, 25 are obtained.

Preferably, said regulation wall 20 delimits, on one side, the regulation chamber 3.

According to a preferred embodiment, said regulation wall 20 extends annularly with respect to axis X-X.

Preferably, the regulation wall 20 is substantially conical or conical-frustum-shaped.

According to a preferred embodiment, the regulation head 50 extends over a circumference stretch with the same inclination as the regulation wall 20.

Preferably, the regulation head 50 is substantially conical-frustum-shaped.

Preferably, the inlet mouth 22 is facing at the conical frustum, at the side walls of the conical frustum. The outlet mouths 23, 24 and 25 are facing.

According to a preferred embodiment, the regulation wall 20 is inclined with respect to axis X-X by an angle between 20° and 60°, preferably 45°.

In other words, the regulation head 50 has a shape substantially complementary to the regulation chamber 3 (except for the space defined by the regulation window 500), with particular reference to said regulation wall 20.

According to a preferred embodiment, the regulation window 500 comprises a sliding plane 550 suitable for directing the working fluid from the inlet mouth 22, i.e., from axis X-X, towards the outlet mouths 23, 24, 25, radially distal from axis X-X.

According to a preferred embodiment, said sliding plane 500 allows the flow of the working fluid to be directed at about 90°.

According to a preferred embodiment, the regulation window 500 extends angularly between two window edges 501, 502.

According to a preferred embodiment, said window edges 501, 502 are angularly spaced apart by an angle comprised between the angular distance angle running between two mutually adjacent outlet mouths and the distance angle between two outlet mouths mutually adjacent to an outlet mouth.

For example, in a preferred embodiment, in which the device body 2 comprises three outlet mouths 23, 24, 25, the window edges 501, 502 are angularly spaced apart by an angle between 120° and 160°.

For example, in a preferred embodiment, in which the device body 2 comprises four outlet mouths, the window edges 501, 502 are angularly spaced apart by an angle between 90° and 120°.

According to a preferred embodiment, the regulation head 50 sealingly engages the regulation wall 20.

According to a preferred embodiment, the regulation head 50 comprises two substantially annular seals axially spaced apart, and comprises a plurality of longitudinal seals angularly spaced apart and extending parallel to axis X-X.

According to a preferred embodiment, the regulation head 50 comprises a first seal 591 and a second seal 592, which are axially mutually distal.

Preferably, the first seal 591 extends over a circumferential stretch between one window edge 501 and the other 502.

Preferably, the second seal 592 extends annularly, over an entire circumference.

According to a preferred embodiment, said regulation head 50 comprises a plurality of longitudinal seals 593, angularly spaced apart.

Preferably, the longitudinal seals 593 extend in height parallel to axis X-X.

According to a preferred embodiment, the longitudinal seals 593 join the first seal 591 and the second seal 592.

Preferably, the number and positions of the longitudinal seals 593 is as a function of the number and position of the outlet mouths. Preferably, at least one longitudinal seal 593 is placed between two outlet mouths closed by the regulation member 5.

According to a preferred embodiment, the regulation device 1 comprises an elastic thrust element 6 suitable for keeping the regulation head 50 engaged with the device body 2.

Preferably, said elastic thrust element 6 is a spring.

In other words, the elastic thrust element 6 is suitable for performing an action along axis X-X.

According to a preferred embodiment, the action of the elastic thrust element 6 is such as to keep the regulation head 50, and in particular the seals thereof, engaged with the regulation wall 20.

According to a preferred embodiment, the regulation device 1 comprises an electric drive 7 engaged to the regulation member 5 to regulate its angular position.

Preferably, the electric drive 7 is an electric motor of the brush type supplied with single-phase current.

According to a preferred embodiment, the regulation device 1 further comprises a connection body 8 suitable for engaging the device body 2.

Preferably, the connection body 8 comprises fluidic connecting stretches 82, 83, 84, 85, fluidically connectable to the inlet mouth 22 and the outlet mouths 23, 24, 25.

Said fluidic connecting stretches 82, 83, 84, 85 are suitable for connecting to the assembly conduits.

According to a preferred embodiment, the fluidic connecting stretches 82, 83, 84, 85 extend incidentally to axis X-X.

Preferably, the connection body 8 is substantially discoidal in shape.

According to a preferred embodiment, the thermal management assembly 100 further comprises a temperature detection sensor 160 detecting the temperature of the working fluid flowing in the intermediate conduit 152.

Preferably, the regulation member 5 is positionable in a regulation position as a function of the temperature detected by the temperature detection sensor 160.

According to a preferred embodiment, the temperature detection sensor 160 is in a strategic position so as to be, firstly, suitable for detecting the temperature of the working fluid following its transit through the working group thus following heat exchange operations within the operating group and, secondly, to be fluidically close to the regulation device 1.

According to a preferred embodiment, the regulation member 5 extends with respect to an axis X-X, and each regulation position corresponds to a respective angular position with respect to said axis X-X.

According to a preferred embodiment, the assembly heat exchanger 170 is suitable for performing a greater cooling action on the working fluid than the cooling action performed by the vehicle heat exchanger 700. In other words, the assembly heat exchanger 170 is suitable for cooling the working fluid faster than the action of the vehicle heat exchanger 700.

Therefore, as a function of needs, the regulation device 1 diverts the working fluid towards the assembly heat exchanger 170 and/or towards vehicle heat exchanger 700.

Furthermore, according to a preferred embodiment, the assembly conduits 150 comprise a reconnection conduit 158 fluidically connecting the vehicle heat exchanger 700 and the operating group 900.

In other words, the fluidic connection between the vehicle heat exchanger 700 and the operating group 900 is achieved by means of the thermal management system 10.

According to a preferred embodiment, the assembly conduits 150 further comprise an assembly outlet conduit 157. Preferably, the third regulation conduit 155 and the assembly heat exchanger outlet conduit 156 are fluidically connected to the operating group 900 through said assembly outlet conduit 157.

According to the invention, the thermal management system 10, in particular the thermal management assembly 100, comprises a non-return valve member 120.

The non-return valve member 120 is positioned so as to prevent the working fluid from flowing into the assembly heat exchanger outlet conduit 156 towards the assembly heat exchanger 170.

In other words, the non-return valve member 120 is suitable for managing the working fluid thus allowing the flow towards the operating group 900 from the regulation device 1 or the assembly heat exchanger 170 while avoiding instead any fluid backflow.

According to a preferred embodiment, the assembly conduits 150 further comprise a reconnection conduit 158 fluidically connecting the vehicle heat exchanger 700 and the operating group 900. Preferably, the reconnection conduit 158 is fluidically connected to the assembly outlet conduit 157.

According to a preferred embodiment, the fluidic management is extremely simplified thus being suitable for fulfilling the necessary requirements as well as the purpose of the present invention.

According to a preferred embodiment, the thermal management assembly 100 further comprises at least one working fluid-containing tank 190.

Preferably, the assembly conduits 150 comprise a tank conduit 159 fluidically connecting the tank 190 to the assembly inlet conduit 151.

According to a preferred embodiment, the pump group 180 draws working fluid from the aforesaid tank 190, as needed.

According to a preferred embodiment, where said vehicle comprises two operating groups 900, such as an engine group and a battery group, and at least one vehicle heat exchanger 700, the thermal management system 10 comprises two thermal management systems 100.

Preferably, each thermal management system 100 is fluidically connected to the first operating group 900, while the other heat management group 100 is fluidically connected to the second operating group 900. The operation of the pump group 180 of a thermal management assembly 100 causes the circulation of the working fluid within the respective installation, towards the respective operating group.

According to a preferred embodiment, the thermal management system 10 comprises a single assembly heat exchanger 170 in common with both thermal management systems 100.

According to a preferred embodiment, the thermal management system 10 comprises a single tank 190 in common with both thermal management systems 100. Preferably, each thermal management assembly 100 comprises a tank conduit 159 connecting the tank 190 and the respective pump group 180.

Preferably, embodiments comprising separate tanks and/or separate assembly heat exchangers and/or separate installation heat exchangers are also possible.

According to a preferred embodiment, the thermal management system 10 is operatively connected to a command unit suitable for commanding the operation of the at least one pump group 180 and the position of the at least one regulation member 5.

According to a preferred embodiment, the command unit is comprised in the vehicle, i.e., the vehicle command unit.

According to a preferred embodiment, the command unit is comprised in the thermal management system 10 and is operatively connected to the vehicle command unit.

According to a preferred embodiment, the thermal management system 10 comprises an assembly body 110 in which the assembly conduits 150 are obtained and on which the at least one pump group 180, the at least one assembly heat exchanger 170, the at least one regulation device 1 and the at last one temperature sensor 160 are supported.

Preferably, the embodiment with two thermal management systems 100 comprises a single assembly body 110 comprising the various components of both systems.

According to a preferred embodiment, the assembly body 110 is fluidically connected to the device body 2.

According to an embodiment, the assembly body 110 further comprises at least one tank 190.

According to a preferred embodiment, the assembly body 110 is a single body, e.g., made of polymer material, or a plurality of mutually joined bodies, e.g., two half-bodies or two shells.

According to a preferred embodiment, the assembly body 110 comprises a housing in which the connection body 8 is housed and fluidically connected to the assembly conduits 150.

Preferably, said housing is discoidal in shape and has a shape complementary to the connection body 8.

The present invention also relates to a thermal management installation 500 of a vehicle comprising at least one operating group 900, such as an engine group or a battery group, and at least one vehicle heat exchanger 700 fluidically connected to a plurality of installation conduits 501, 502 503, 504 of the thermal management installation 500, where the thermal management installation 500 further comprises a thermal management system 10 as described above.

The present invention further relates to a vehicle comprising at least one operating group 900, such as an engine group or battery group, and at least one vehicle heat exchanger 700, where the vehicle further comprises a thermal management installation 500 fluidically connecting the at least one operating group 900 and the at least one heat exchanger 700.

Innovatively, the regulation device, the thermal management system comprising said regulation device, the thermal management installation of a vehicle, which comprises such a regulation assembly, and the vehicle comprising said thermal management installation largely fulfil the purpose of the present invention by solving the problems emerged in the typical solutions of the prior art.

Advantageously, the thermal management system of the present invention allows the thermal regulation of one or more operating groups efficiently and effectively.

Advantageously, the regulation device is easily regulatable to a multiplicity of regulation positions such that the flow rate of the working fluid is directed to one component or several components.

Advantageously, the regulation device is quickly regulatable to a multiplicity of regulation positions by abruptly changing the fluid temperature regulation.

Advantageously, by means of the regulation device, it is possible to speed up or slow down the heat exchange of the working fluid.

Advantageously, the operating group is reachable by the working fluid with mixed temperature.

Advantageously, the fluidic management within the regulation device is greatly simplified. Advantageously, the direction of flows is varied only when required.

Advantageously, the regulation device has a compact size.

Advantageously, the new electric- or hybrid-powered vehicles feature a simple temperature management of electronic components, such as the electric motor group and/or battery group.

It is apparent that, in order to meet contingent needs, those skilled in the art may make changes to the invention, all contained within the scope of protection as defined by the following claims.

## Claims

1. A thermal management system (10) for a thermal management installation (500) of a vehicle, wherein said vehicle comprises at least one operating group (900), e.g., an engine group or a battery group, and at least one vehicle heat exchanger (700) fluidically connected to a plurality of installation conduits (501, 502, 503, 504) of the thermal management installation (500), wherein the thermal management system (10) comprises a thermal management assembly (100):
i) at least one pump group (180);
ii) at least one assembly heat exchanger (170);
iii) at least one regulation device (1);
iv) assembly conduits (150) comprising:
- an assembly inlet conduit (151) fluidically connecting the operating group (900) and the pump group (180);
- an intermediate conduit (152) fluidically connecting the pump group (180) and the regulation device (1);
- a first regulation conduit (153) fluidically connecting the regulation device (1) and the assembly heat exchanger (170);
- a second regulation conduit (154) fluidically connecting the regulation device (1) and the vehicle heat exchanger (700);
- a third regulation conduit (155) fluidically connecting the regulation device (1) and the operating group (900);
- an exchanger outlet conduit (156) fluidically connecting the assembly heat exchanger (170) and the operating group (900);
wherein the regulation device (1) comprises a regulation member (5) positionable in a regulation position, in which it diverts the output of the entire working fluid flow to a single regulation conduit, or in a regulation position, in which it diverts the working fluid flow between two regulation conduits;
wherein the thermal management system (10) is **characterized by** the fact that it also comprises a non-return valve member (120), wherein the third regulation conduit (155) and the assembly exchanger outlet conduit (156) are fluidically connected to the operating group (900) flowing into the same assembly outlet conduit (157) comprised, in turn, in the assembly conduits (150), fluidically connecting the operating group (900) and the non-return valve member (120) is positioned to prevent the working fluid from flowing into the assembly heat exchanger outlet conduit (156) towards the assembly heat exchanger (170) .

2. The thermal management system (10) according to claim 1, wherein the thermal management assembly (100) further comprises a temperature detection sensor (160) detecting the temperature of the working fluid flowing in the intermediate conduit (152), wherein the regulation member (5) is positionable in a regulation position as a function of the temperature detected by the temperature detection sensor (160).

3. The thermal management system (10) according to any one of the preceding claims, wherein the regulation member (5) extends relative to an axis (X-X), and each regulation position corresponds to a respective angular position relative to said axis (X-X).

4. The thermal management system (10) according to claim 3, wherein the regulation device (1) comprises a device body (2) comprising an regulation chamber (3) housing the regulation member (5), wherein said device body (2) comprises a device inlet mouth (22) positioned on the axis (X-X), fluidically connected to the intermediate inlet conduit (152), and comprises device outlet mouths (23, 24, 25) positioned spaced apart from the axis (X-X), preferably mutually angularly equidistant, each fluidically connected to the first regulation conduit (153), the second regulation conduit (154) and the third regulation conduit (155).

5. The thermal management system (10) according to claim 4, wherein the device body (2) comprises an regulation wall (20) on which the device outlet mouths (23, 24, 25) are formed, wherein said regulation wall (20) extends annularly relative to the axis (X-X), wherein the regulation member (5) comprises an regulation head (50) which extends for a circumferential stretch.

6. The thermal management system (10) according to any one of the preceding claims from 3 to 5, wherein the regulation device (1) comprises an electric drive (5), preferably an electric motor of the brush type powered with a single-phase current, engaged to the regulation member (5) for regulating the angular position thereof.

7. The thermal management system (10) according to any one of the preceding claims, wherein the assembly heat exchanger (170) is a heat exchanger of the liquid-cooled type.

8. The thermal management system (10) according to claim 7, wherein the vehicle heat exchanger (700) is a heat exchanger of the air-cooled type, wherein the assembly heat exchanger (170) is suitable for performing a greater cooling action on the working fluid than the cooling action performed by the vehicle heat exchanger (700).

9. The thermal management system (10) according to any one of the preceding claims, further comprising a reconnection conduit (158) fluidically connecting the vehicle heat exchanger (700) and the operating group (900).

10. The thermal management system (10) according to any one of the previous claims, wherein the assembly conduits (150) further comprise a reconnection conduit (158) fluidically connecting the vehicle heat exchanger (700) and the operating group (900), wherein said reconnection conduit (158) is fluidically connected to the assembly outlet conduit (157).

11. The thermal management system (10) according to any one of the preceding claims, wherein the thermal management assembly (100) further comprises, at least one tank (190) containing the working fluid, and the assembly conduits (150) comprise a tank conduit (159) fluidically connecting the tank (190) to the assembly inlet conduit (151).

12. The thermal management system (10) according to any one of the preceding claims, of the thermal management system (500) of a vehicle, wherein said vehicle comprises two operating groups (900), e.g., an engine group and a battery pack, and at least one vehicle heat exchanger (700), wherein the thermal management system (10) comprises two thermal management assemblies (100), wherein one thermal management assembly (100) is fluidically connected to the first operating group (900), while the other thermal management assembly (100) is fluidically connected to the second operating group (900).

13. The thermal management system (10) according to claim 12, comprising a single assembly heat exchanger (170) in common with both thermal management assemblies (100).

14. The thermal management system (10) according to claim 12 or claim 13 in combination with claim 11, comprising a single tank (190) in common with both thermal management assemblies (100), each thermal management assembly (100) comprises a tank conduit (159) connecting the tank (190) to the respective pump group (180).

15. The thermal management system (10) according to any one of the preceding claims, operatively connected to a command unit suitable for commanding the actuation of the at least one pump group (180) and the position of the at least one regulation member (5).

16. The thermal management system (10) according to any one of the preceding claims, comprising an assembly body (110) in which the assembly conduits (150) are formed and on which the at least one pump group (180), the at least one assembly heat exchanger (170), the at least one regulation device (1) and the at last one temperature sensor (160) are supported.

17. The thermal management system (10) according to claim 16, wherein the assembly body (110) comprises the at least one tank (190).

18. A thermal management installation (500) of a vehicle, comprising at least one operating group (900), e.g., an engine group or a battery group, and at least one vehicle heat exchanger (700) fluidically connected to a plurality of installation conduits (501, 502 503, 504) of the thermal management installation (500), wherein the thermal management installation (500) further comprises a thermal management system (10) according to any one of the preceding claims.

19. A vehicle comprising at least one operating group (900), such as an engine group or battery group, and at least one vehicle heat exchanger (700), wherein the vehicle further comprises a thermal management installation (500) according to claim 18 fluidically connecting the at least one operating group (900) and the at least one heat exchanger (700).

## Patentansprüche

1. Wärmeverwaltungssystem (10) für eine Wärmeverwaltungsanlage (500) eines Fahrzeugs, wobei das Fahrzeug mindestens eine Betriebsgruppe (900), z. B. eine Motorgruppe oder eine Batteriegruppe, und mindestens einen Fahrzeugwärmetauscher (700), der in Fluidverbindung mit einer Mehrzahl von Anlagenleitungen (501, 502, 503, 504) der Wärmeverwaltungsanlage (500) steht, umfasst, wobei das Wärmeverwaltungssystem (10) eine Wärmeverwaltungsbaugruppe (100) umfasst:
i) mindestens eine Pumpengruppe (180);
ii) mindestens einen Baugruppenwärmetauscher (170);
iii) mindestens eine Regelvorrichtung (1);
iv) Baugruppenleitungen (150) umfassend:
- eine Baugruppeneinlassleitung (151), die die Betriebsgruppe (900) und die Pumpengruppe (180) in Fluidverbindung setzt;
- eine Zwischenleitung (152), die die Pumpengruppe (180) und die Regelvorrichtung (1) in Fluidverbindung setzt;
- eine erste Regelleitung (153), die die Regelvorrichtung (1) und den Baugruppenwärmetauscher (170) in Fluidverbindung setzt;
- eine zweite Regelleitung (154), die die Regelvorrichtung (1) und den Fahrzeugwärmetauscher (700) in Fluidverbindung setzt;
- eine dritte Regelleitung (155), die die Regelvorrichtung (1) und die Betriebsgruppe (900) in Fluidverbindung setzt;
- eine Wärmetauscherauslassleitung (156), die den Baugruppenwärmetauscher (170) und die Betriebsgruppe (900) in Fluidverbindung setzt;
wobei die Regelvorrichtung (1) ein Regelelement (5) umfasst, das in einer Regelstellung positioniert werden kann, in der es den Auslass des gesamten Arbeitsflussigkeitsstroms in eine einzelne Regelleitung umleitet, oder in einer Regelstellung, in der es den Arbeitsflüssigkeitsstrom zwischen zwei Regelleitungen umleitet;
wobei das Wärmeverwaltungssystem (10) **dadurch gekennzeichnet ist, dass** es ferner ein Rückschlagventilelement (120) umfasst, wobei die dritte Regelleitung (155) und die Baugruppenwärmetauscherauslassleitung (156) in Fluidverbindung mit der Betriebsgruppe (900) stehen, indem sie in dieselbe Baugruppenauslassleitung (157) münden, die ihrerseits in den Baugruppenleitungen (150) enthalten ist, die die Betriebsgruppe (900) in Fluidverbindung setzen, und das Rückschlagventilelement (120) positioniert wird, um zu verhindern, dass die Arbeitsflüssigkeit in die Baugruppenwärmetauscherauslassleitung (156) zu dem Baugruppenwärmetauscher (170) strömt.

2. Wärmeverwaltungssystem (10) nach Anspruch 1, wobei die Wärmeverwaltungsbaugruppe (100) ferner einen Temperaturerfassungssensor (160) umfasst, der die Temperatur der Arbeitsflüssigkeit, die in der Zwischenleitung (152) strömt, erfasst, wobei das Regelelement (5) in einer Regelstellung in Abhängigkeit von der Temperatur, die von dem Temperaturerfassungssensor (160) erfasst wird, positioniert werden kann.

3. Wärmeverwaltungssystem (10) nach einem der vorhergehenden Ansprüche, wobei sich das Regelelement (5) in Bezug auf eine Achse (X-X) erstreckt und jede Regelstellung einer jeweiligen Winkelstellung in Bezug auf die Achse (X-X) entspricht.

4. Wärmeverwaltungssystem (10) nach Anspruch 3, wobei die Regelvorrichtung (1) einen Vorrichtungskörper (2) umfasst, der eine Regelkammer (3) umfasst, die das Regelelement (5) aufnimmt, wobei der Vorrichtungskörper (2) eine Vorrichtungseinlassmündung (22) umfasst, die auf der Achse (X-X) positioniert ist und in Fluidverbindung mit der Zwischeneinlassleitung (152) steht, und Vorrichtungsauslassmündungen (23, 24, 25) umfasst, die entfernt von der Achse (X-X) positioniert sind, vorzugsweise zueinander winkelgleich entfernt, wobei jede in Fluidverbindung mit der ersten Regelleitung (153), der zweiten Regelleitung (154) und der dritten Regelleitung (155) steht.

5. Wärmeverwaltungssystem (10) nach Anspruch 4, wobei der Vorrichtungskörper (2) eine Regelwand (20) umfasst, an der die Vorrichtungsauslassmündungen (23, 24, 25) ausgebildet sind, wobei sich die Regelwand (20) ringförmig in Bezug auf die Achse (X-X) erstreckt, wobei das Regelelement (5) einen Regelkopf (50) umfasst, der sich über eine Umfangserstreckung erstreckt.

6. Wärmeverwaltungssystem (10) nach einem der vorhergehenden Ansprüche 3 bis 5, wobei die Regelvorrichtung (1) einen elektrischen Antrieb (5), vorzugsweise einen Elektromotor des Bürstentyps umfasst, der mit Einphasenstrom versorgt wird, der mit dem Regelelement (5) zur Regelung seiner Winkelstellung in Eingriff steht.

7. Wärmeverwaltungssystem (10) nach einem der vorhergehenden Ansprüche, wobei der Baugruppenwärmetauscher (170) ein Wärmetauscher des flüssigkeitsgekühlten Typs ist.

8. Wärmeverwaltungssystem (10) nach Anspruch 7, wobei der Fahrzeugwärmetauscher (700) ein Wärmetauscher des luftgekühlten Typs ist, wobei der Baugruppenwärmetauscher (170) geeignet ist, eine Kühlwirkung auf die Arbeitsflüssigkeit auszuüben, die größer als die Kühlwirkung ist, die von dem Fahrzeugwärmetauscher (700) ausgeübt wird.

9. Wärmeverwaltungssystem (10) nach einem der vorhergehenden Ansprüche, ferner umfassend eine Wiederverbindungsleitung (158), die den Fahrzeugwärmetauscher (700) und die Betriebsgruppe (900) in Fluidverbindung setzt.

10. Wärmeverwaltungssystem (10) nach einem der vorhergehenden Ansprüche, wobei die Baugruppenleitungen (150) ferner eine Wiederverbindungsleitung (158) umfassen, die den Fahrzeugwärmetauscher (700) und die Betriebsgruppe (900) in Fluidverbindung setzt, wobei die Wiederverbindungsleitung (158) in Fluidverbindung mit der Baugruppenauslassleitung (157) steht.

11. Wärmeverwaltungssystem (10) nach einem der vorhergehenden Ansprüche, wobei die Wärmeverwaltungsbaugruppe (100) ferner mindestens einen Behälter (190) umfasst, der die Arbeitsflüssigkeit enthält, und die Baugruppenleitungen (150) eine Behälterleitung (159) umfassen, die den Behälter (190) in Fluidverbindung mit der Baugruppeneinlassleitung (151) setzt.

12. Wärmeverwaltungssystem (10) nach einem der vorhergehenden Ansprüche der Wärmeverwaltungsanlage (500) eines Fahrzeugs, wobei das Fahrzeug zwei Betriebsgruppen (900), z. B. eine Motorgruppe und ein Batteriegruppe, und mindestens einen Fahrzeugwärmetauscher (700) umfasst, wobei das Wärmeverwaltungssystem (10) zwei Wärmeverwaltungsbaugruppen (100) umfasst, wobei eine Wärmeverwaltungsbaugruppe (100) in Fluidverbindung mit der ersten Betriebsgruppe (900) steht, während die andere Wärmeverwaltungsbaugruppe (100) in Fluidverbindung mit der zweiten Betriebsgruppe (900) steht.

13. Wärmeverwaltungssystem (10) nach Anspruch 12, umfassend einen einzelnen Baugruppenwärmetauscher (170), der mit beiden Wärmeverwaltungsbaugruppen (100) gemeinsam ist.

14. Wärmeverwaltungssystem (10) nach Anspruch 12 oder Anspruch 13 in Kombination mit Anspruch 11, umfassend einen einzelnen Behälter (190), der mit beiden Wärmeverwaltungsbaugruppen (100) gemeinsam ist, wobei jede Wärmeverwaltungsbaugruppe (100) eine Behälterleitung (159) umfasst, die den Behälter (190) mit der jeweiligen Pumpengruppe (180) verbindet.

15. Wärmeverwaltungssystem (10) nach einem der vorhergehenden Ansprüche, das operativ mit einer Steuereinheit verbunden ist, die geeignet ist, die Betätigung der mindestens einen Pumpengruppe (180) und die Stellung des mindestens einen Regelelements (5) zu steuern.

16. Wärmeverwaltungssystem (10) nach einem der vorhergehenden Ansprüche, umfassend einen Baugruppenkörper (110), in dem die Baugruppenleitungen (150) ausgebildet sind und an dem die mindestens eine Pumpengruppe (180), der mindestens eine Baugruppenwärmetauscher (170), die mindestens eine Regelvorrichtung (1) und der mindestens eine Temperatursensor (160) getragen werden.

17. Wärmeverwaltungssystem (10) nach Anspruch 16, wobei der Baugruppenkörper (110) den mindestens einen Behälter (190) umfasst.

18. Wärmeverwaltungsanlage (500) eines Fahrzeugs, umfassend mindestens eine Betriebsgruppe (900), z. B. eine Motorgruppe oder eine Batteriegruppe, und mindestens einen Fahrzeugwärmetauscher (700), der in Fluidverbindung mit einer Mehrzahl von Anlagenleitungen (501, 502, 503, 504) der Wärmeverwaltungsanlage (500) steht, wobei die Wärmeverwaltungsanlage (500) ferner ein Wärmeverwaltungssystem (10) nach einem der vorhergehenden Ansprüche umfasst.

19. Fahrzeug umfassend mindestens eine Betriebsgruppe (900), wie eine Motorgruppe oder eine Batteriegruppe, und mindestens einen Fahrzeugwärmetauscher (700), wobei das Fahrzeug ferner eine Wärmeverwaltungsanlage (500) nach Anspruch 18 umfasst, die die mindestens eine Betriebsgruppe (900) und den mindestens einen Wärmetauscher (700) in Fluidverbindung setzt.

## Revendications

1. Système de gestion thermique (10) pour une installation de gestion thermique (500) d'un véhicule, dans lequel ledit véhicule comprend au moins un groupe opératoire (900), par exemple un groupe moteur ou un groupe batterie, et au moins un échangeur de chaleur du véhicule (700) relié fluidiquement à une pluralité de conduits d'installation (501, 502, 503, 504) de l'installation de gestion thermique (500), dans lequel le système de gestion thermique (10) comprend un ensemble de gestion thermique (100) comprenant :
i) au moins un groupe pompe (180) ;
ii) au moins un échangeur de chaleur d'ensemble (170) ;
iii) au moins un dispositif de régulation (1) ;
iv) des conduits d'ensemble (150) comprenant :
- un conduit d'entrée d'ensemble (151) reliant fluidiquement le groupe opératoire (900) et le groupe pompe (180) ;
- un conduit intermédiaire (152) reliant fluidiquement le groupe pompe (180) et le dispositif de régulation (1) ;
- un premier conduit de régulation (153) reliant fluidiquement le dispositif de régulation (1) et l'échangeur de chaleur d'ensemble (170) ;
- un second conduit de régulation (154) reliant fluidiquement le dispositif de régulation (1) et l'échangeur de chaleur du véhicule (700) ;
- un troisième conduit de régulation (155) reliant fluidiquement le dispositif de régulation (1) et le groupe opératoire (900) ;
- un conduit de sortie d'échangeur (156) reliant fluidiquement l'échangeur de chaleur d'ensemble (170) et le groupe opératoire (900) ;
dans lequel le dispositif de régulation (1) comprend un organe de régulation (5) positionnable dans une position de régulation, dans laquelle il dévie la sortie de l'intégralité du débit de fluide de travail vers un seul conduit de régulation, ou dans une position de régulation, dans laquelle il dévie le débit de fluide de travail entre deux conduits de régulation ;
dans lequel le système de gestion thermique (10) est **caractérisé en ce qu'**il comprend en outre un organe de valve anti-retour (120), dans lequel le troisième conduit de régulation (155) et le conduit de sortie d'échangeur d'ensemble (156) sont reliés fluidiquement au groupe opératoire (900) en s'écoulant dans un même conduit de sortie d'ensemble (157) compris, à son tour, dans les conduits d'ensemble (150), reliant fluidiquement le groupe opératoire (900) et l'organe de valve anti-retour (120) est positionné pour empêcher le fluide de travail de s'écouler dans le conduit de sortie d'échangeur d'ensemble (156) vers l'échangeur de chaleur d'ensemble (170).

2. Système de gestion thermique (10) selon la revendication 1, dans lequel l'ensemble de gestion thermique (100) comprend en outre un capteur de détection de température (160) détectant la température du fluide de travail s'écoulant dans le conduit intermédiaire (152), dans lequel l'organe de régulation (5) est positionnable dans une position de régulation en fonction de la température détectée par le capteur de détection de température (160).

3. Système de gestion thermique (10) selon l'une quelconque des revendications précédentes, dans lequel l'organe de régulation (5) s'étend par rapport à un axe (X-X), et chaque position de régulation correspond à une position angulaire respective par rapport audit axe (X-X).

4. Système de gestion thermique (10) selon la revendication 3, dans lequel le dispositif de régulation (1) comprend un corps de dispositif (2) comprenant une chambre de régulation (3) logeant l'organe de régulation (5), dans lequel ledit corps de dispositif (2) comprend une bouche d'entrée de dispositif (22) positionnée sur l'axe (X-X), reliée fluidiquement au conduit d'entrée intermédiaire (152), et comprend des bouches de sortie de dispositif (23, 24, 25) positionnées espacées de l'axe (X-X), de préférence mutuellement équidistantes angulairement, chacune reliée fluidiquement au premier conduit de régulation (153), au second conduit de régulation (154) et au troisième conduit de régulation (155).

5. Système de gestion thermique (10) selon la revendication 4, dans lequel le corps de dispositif (2) comprend une paroi de régulation (20) sur laquelle les bouches de sortie de dispositif (23, 24, 25) sont formées, dans lequel ladite paroi de régulation (20) s'étend annulairement par rapport à l'axe (X-X), dans lequel l'organe de régulation (5) comprend une tête de régulation (50) qui s'étend sur une portion circonférentielle.

6. Système de gestion thermique (10) selon l'une quelconque des revendications précédentes de 3 à 5, dans lequel le dispositif de régulation (1) comprend un entraînement électrique (5), de préférence un moteur électrique de type à balais alimenté par un courant monophasé, engagé avec l'organe de régulation (5) pour régler sa position angulaire.

7. Système de gestion thermique (10) selon l'une quelconque des revendications précédentes, dans lequel l'échangeur de chaleur d'ensemble (170) est un échangeur de chaleur de type refroidi par liquide.

8. Système de gestion thermique (10) selon la revendication 7, dans lequel l'échangeur de chaleur du véhicule (700) est un échangeur de chaleur de type refroidi par air, dans lequel l'échangeur de chaleur d'ensemble (170) est apte à effectuer une action de refroidissement plus importante sur le fluide de travail que l'action de refroidissement effectuée par l'échangeur de chaleur du véhicule (700).

9. Système de gestion thermique (10) selon l'une quelconque des revendications précédentes, comprenant en outre un conduit de reconnexion (158) reliant fluidiquement l'échangeur de chaleur du véhicule (700) et le groupe opératoire (900).

10. Système de gestion thermique (10) selon l'une quelconque des revendications précédentes, dans lequel les conduits d'ensemble (150) comprennent en outre un conduit de reconnexion (158) reliant fluidiquement l'échangeur de chaleur du véhicule (700) et le groupe opératoire (900), dans lequel ledit conduit de reconnexion (158) est relié fluidiquement au conduit de sortie d'ensemble (157).

11. Système de gestion thermique (10) selon l'une quelconque des revendications précédentes, dans lequel l'ensemble de gestion thermique (100) comprend en outre au moins un réservoir (190) contenant le fluide de travail, et les conduits d'ensemble (150) comprennent un conduit de réservoir (159) reliant fluidiquement le réservoir (190) au conduit d'entrée d'ensemble (151).

12. Système de gestion thermique (10) selon l'une quelconque des revendications précédentes, de l'installation de gestion thermique (500) d'un véhicule, dans lequel ledit véhicule comprend deux groupes opératoires (900), par exemple un groupe moteur et un pack batterie, et au moins un échangeur de chaleur du véhicule (700), dans lequel le système de gestion thermique (10) comprend deux ensembles de gestion thermique (100), dans lequel un ensemble de gestion thermique (100) est relié fluidiquement au premier groupe opératoire (900), tandis que l'autre ensemble de gestion thermique (100) est relié fluidiquement au second groupe opératoire (900).

13. Système de gestion thermique (10) selon la revendication 12, comprenant un seul échangeur de chaleur d'ensemble (170) commun aux deux ensembles de gestion thermique (100).

14. Système de gestion thermique (10) selon la revendication 12 ou la revendication 13 en combinaison avec la revendication 11, comprenant un seul réservoir (190) commun aux deux ensembles de gestion thermique (100), chaque ensemble de gestion thermique (100) comprenant un conduit de réservoir (159) reliant le réservoir (190) au groupe pompe respectif (180).

15. Système de gestion thermique (10) selon l'une quelconque des revendications précédentes, relié opérationnellement à une unité de commande apte à commander l'actionnement dudit au moins un groupe pompe (180) et la position dudit au moins un organe de régulation (5).

16. Système de gestion thermique (10) selon l'une quelconque des revendications précédentes, comprenant un corps d'ensemble (110) dans lequel les conduits d'ensemble (150) sont formés et sur lequel ledit au moins un groupe pompe (180), ledit au moins un échangeur de chaleur d'ensemble (170), ledit au moins un dispositif de régulation (1) et ledit au moins un capteur de température (160) sont supportés.

17. Système de gestion thermique (10) selon la revendication 16, dans lequel le corps d'ensemble (110) comprend ledit au moins un réservoir (190).

18. Installation de gestion thermique (500) d'un véhicule, comprenant au moins un groupe opératoire (900), par exemple un groupe moteur ou un groupe batterie, et au moins un échangeur de chaleur du véhicule (700) relié fluidiquement à une pluralité de conduits d'installation (501, 502, 503, 504) de l'installation de gestion thermique (500), dans lequel l'installation de gestion thermique (500) comprend en outre un système de gestion thermique (10) selon l'une quelconque des revendications précédentes.

19. Véhicule comprenant au moins un groupe opératoire (900), tel qu'un groupe moteur ou un groupe batterie, et au moins un échangeur de chaleur du véhicule (700), dans lequel le véhicule comprend en outre une installation de gestion thermique (500) selon la revendication 18 reliant fluidiquement ledit au moins un groupe opératoire (900) et ledit au moins un échangeur de chaleur (700).
